# EUROPÄISCHE PATENTSCHRIFT

(11) **EP 1 254 624 B1**
(45) Veröffentlichungstag und Bekanntmachung des Hinweises auf die Patenterteilung: **11.07.2007**
(21) Anmeldenummer: 02009706.9
(22) Anmeldetag: 29.04.2002
(51) Int. Cl.: A47J 43/07

(54) **Abdeckung für Haushaltsgerät, insbesondere Küchenmaschine**
Cover for household appliance, in particular kitchen appliance
Couvercle pour appareil ménager, notamment appareil de cuisine

(30) Priorität: 04.05.2001 DE 10121803
(43) Veröffentlichungstag der Anmeldung: 06.11.2002
(73) Patentinhaber: BSH Bosch und Siemens Hausgeräte GmbH, 81739 München (DE)
(72) Erfinder: Areh, Marko, 2360 Radlje ob Dravi (SI); Pesec, Jurij, 3301 Petrovce (SI); Zibret, Igor, 3327 Smartno ob Paki (SI)

(56) Entgegenhaltungen:
- WO-A-00/48498
- US-A- 4 325 643
- US-A- 5 524 530

## Beschreibung

Die vorliegende Erfindung betrifft einen Deckel zum Verschließen und Öffnen der Zugänglichkeit einer an einem Gehäuse eines Haushaltsgeräts vorgesehenen Schnittstelle, wie aus dem Dokument US 4 325 643 bekannt.

Haushaltsgeräte, insbesondere Küchengeräte haben mechanische Schnittstellen, beispielsweise zum Andocken von Mixern oder Rührgeräten, an einer zentralen Antriebseinheit oder sie haben elektrische Schnittstellen beispielsweise zwischen der Basisstation und dem Kochbehälter eines Wasserkochers. Diese Schnittstellen müssen zum Schutz vor Verschmutzung oder vor Spritzwasser geschützt werden. Bei einer Küchenmaschine sind üblicherweise für unterschiedliche Zusatzgeräte unterschiedliche Antriebsschnittstellen vorgesehen. Diese Schnittstellen werden bei nicht Gebrauch durch einen Deckel abgedeckt, um sie vor Zucker, Mehl, Salz und dergleichen zu schützen.

Im Stand der Technik ist es bekannt, zwischen dem Deckel und dem Gehäuse eines Küchen- bzw. Hauhaltsgeräts eine Verrastung vorzusehen, bei der kreisförmig am Deckel eine Vielzahl von federelastischen Rastelementen angeordnet sind, die bei geschlossenem Deckel mit einer Hinterschneidung in Eingriff bringbar sind, die in einer Vertiefung um die Schnittstelle herum im Gehäuse ausgebildet ist. Zum Öffnen des Deckels sind am Deckel Griffmulden oder Überstände zum Eingreifen der Fingerspitzen am Deckel ausgebildet. Diese Anordnung ist nachteilig, da die Gefahr der Verletzung der Fingernägel an den Überständen oder an den Griffmulden gegeben ist.

Weiterhin ist es bekannt den Deckel als eine Wippe auszubilden, der Deckel ist dazu mit einem Verlängerungsabschnitt versehen, wobei zwischen dem Verlängerungsabschnitt und dem eigentlichen Deckel ein Steg ausgebildet ist, um den der Deckel schwenkbar ist. Zum Öffnen dieser Deckelanordnung wird mit einem Finger auf den Verlängerungsabschnitt gedrückt, wobei sich der über der Schnittstelle befindliche Abschnitt des Deckels gegenüber dem Gehäuse des Küchengeräts abheben und herausnehmen läßt. Nachteilig an dieser Anordnung ist der vergrößerte Platzbedarf für die Unterbringung des durch die Wippe und den Verlängerungsabschnitt vergrößerten Deckels im Gehäuse.

Weiterhin sind Deckel mit einem sogenannten Drehverschluß bekannt, bei dem am äußeren Umfang des Deckels mehrere zueinander beabstandete Klauen und am Gehäuse zu den Klauen korrespondierende Vorsprünge angeordnet sind. Der Deckel wird auf das Gehäuse aufgesetzt, indem seine Klauen in den Zwischenräumen zwischen zwei Vorsprünge eingesetzt werden und durch eine Drehbewegung des Deckels die Klauen unter die Vorsprünge bewegt werden, um eine Verriegelung zwischen Deckel und Gehäuse zu bewerkstelligen. Nachteilige an dieser Anordnung ist der hohe Fertigungsaufwand zum Ausbilden der Klauen am Deckel und der Vorsprünge am Gehäuse, die bei der Herstellung jeweils eine komplizierte Gußform oder mechanische Bearbeitung erforderlich machen.

Aufgabe der vorliegenden Erfindung ist es daher, einen Deckel zum Verschließen und Öffnen einer an einem Gehäuse eines Haushaltsgeräts vorgesehenen Schnittstelle zur Verfügung zu stellen, der einfach zu fertigen ist, einfach zu handhaben ist und einen geringen Raumbedarf am Haushaltsgerät hat.

Dies Aufgabe wird durch einen Deckel mit den Merkmalen des Anspruchs 1 gelöst.

Indem zum Verschließen und Öffnen der Zugänglichkeit einer an einem Gehäuse eines Haushaltsgeräts vorgesehenen Schnittstelle mit einer entweder am Deckel oder am Gehäuse angeordneten Nocke und einem am jeweiligen Gegenstück entweder an dem Gehäuse oder an dem Deckel angeordneten Vorsprung versehen ist, wobei im geschlossenen Zustand des Deckels die Nocke zum Vorsprung derart angeordnet ist, daß durch eine Relativbewegung zwischen Deckel und Gehäuse der Vorsprung über die Nocke gleitet, wodurch der Deckel gegenüber dem Gehäuse abhebbar ist, sind folgende Vorteile erzielbar.

Der Deckel ist einfach zu fertigen, da sowohl bei der Ausbildung des Vorsprungs als auch bei der Ausbildung der zugehörigen Nocke weder am Gehäuse noch am Deckel Hinterschneidungen ausgebildet werden müssen, so daß sowohl der Deckel als auch das Gehäuse im Bereich der Schnittstelle mittels einer einfach aufgebauten Form beispielsweise im Spritzgießverfahren hergestellt werden können. Auch ist der Raumbedarf für die Anordnung einer Nocke und eines zugehörigen Vorsprungs sehr gering, so daß der Deckel wenig Bauraum benötigt, wodurch insgesamt ein kompakt bauendes Gerät zur Verfügung gestellt werden kann. Weiterhin kann der in geschlossenem Zustand befindliche Deckel durch eine einfache Relativbewegung zwischen Deckel und Gehäuse von der Schnittstelle abgehoben werden, indem durch die Relativbewegung die Nocke über den Vorsprung gleitet und dabei das Abheben des Deckels gegenüber dem Gehäuse auf einfache Weise bewerkstelligbar ist.

Vorteilhafte Ausgestaltungen der Erfindung sind in den Unteransprüchen dargelegt.

In einer vorteilhaften Ausgestaltung ist zwischen dem Deckel und dem Gehäuse eine Klemmeinrichtung vorgesehen, mit der der Deckel im geschlossenen Zustand gegenüber dem Gehäuse klemmend gehalten wird. Diese Klemmeinrichtung ist vorteilhaft, da der Deckel im geschlossenen Zustand nicht nur lose über der Schnittstelle liegt, sondern auch in dieser geschlossenen Position gehalten werden kann. Besonders vorteilhaft in diesem Zusammenhang ist eine Klemmeinrichtung, die einen am Deckel angeordneten federelastischen Klinkenhebel hat, der bei geschlossenem Deckel mit einer am Gehäuse ausgebildeten Hinterschneidung verrastbar ist.

In einer besonders vorteilhaften Ausgestaltung der Erfindung ist die Nocke als eine am Deckel vorgesehene schiefe Ebene ausgebildet, die in Kontakt mit dem am Gehäuse vorgesehenen Vorsprung bringbar ist. Durch das Vorsehen einer schiefen Ebene oder eine Rampe ist es möglich, über einen relativ langen Weg bei geringem Kraftaufwand den Deckel gegenüber dem Gehäuse abzuheben, wobei der Kraftaufwand über den Grad der Neigung der schiefen Ebene einstellbar ist, so daß auch bei Vorhandensein einer Klemmeinrichtung ein nur geringer Kraftaufwand zum Öffnen des Deckels erforderlich ist.

In einer vorteilhaften Ausgestaltung der Erfindung ist im Gehäuse um die abzudeckende Schnittstelle eine topfförmige Vertiefung ausgebildet, die einen zylindrischen Wandabschnitt und eine Bodenfläche hat, wobei die Klinke und/oder die Nocke auf einem Kreis am Deckel angeordnet ist/sind der kleiner im Durchmesser als der innere Durchmesser des zylindrischen Wandabschnitts ist. Hierdurch ist es möglich, daß die Klinke und/oder die Nocke als Zentrierung bzw. als Positioniereinrichtung beim Schließvorgang dienen kann/können.

In einer weiteren vorteilhaften Ausgestaltung der Erfindung sind zwei diametral gegenüberliegende federelastische Klinkenhebel und/oder zwei diametral gegenüberliegende Nocken am Deckel ausgebildet. Durch die diametrale Anordnung der Klinkenhebel ist es möglich den Deckel mittig in der Vertiefung zu positionieren und durch die diametrale Anordnung der Nocken, ist ein gleichmäßiges Abheben des Deckels beim Drehen des Deckels möglich.

In einer weiteren vorteilhaften Ausgestaltung der Erfindung ist der Vorsprung als radialer Vorsprung ausgebildet, der sich vom zylindrischen Wandabschnitt radial in die Vertiefung erstreckt, um zwischen Bodenwand und dem radialen Vorsprung eine Hinterschneidung zum Eingriff des federelastischen Klinkenhebels auszubilden, wobei beim Drehen des geschlossenen Deckels die Nocke mit dem radialen Vorsprung in Eingriff bringbar und der Deckel gegenüber der Oberfläche des Gehäuses abhebbar ist. Hierdurch ist es möglich den Vorsprung sowohl als Rastelement für die Klinke als auch zum Abheben des Deckels zu verwenden.

In einer besonders vorteilhaften Ausgestaltung der Erfindung ist die Nocke symmetrisch ausgebildet und zu beiden Seiten der Nocke ein Vorsprung angeordnet, so daß bei jeder Drehrichtung des geschlossenen Deckels die Nocke mit einem der beiden benachbarten Nocken in Kontakt bringbar und der Deckell abhebbar ist.

Anhand der Zeichnung wird ein Ausführungsbeispiel der Erfindung im folgenden beispielhaft näher erläutert.

Es zeigt:
Fig. 1 eine Draufsicht von unten auf einen Deckel zum Verschließen und Öffnen einer an einem Gehäuse eines Haushaltsgeräts bzw. Küchengeräts vorgesehenen Schnittstelle;
Fig. 2 eine Schnittansicht des Deckels nach Fig. 1 entlang der Linie A-A;
Fig. 3 eine Schnittansicht des Deckels nach Fig. 1 und 2 in im Gehäuse des Haushaltsgeräts eingebauten Zustand;
Fig. 4 eine Draufsicht auf die am Gehäuse des Haushaltsgeräts ausgebildete Schnittstelle;
Fig. 5 eine Abwandlung des Deckels nach Fig. 1;
Fig. 6 eine Schnittansicht des Deckels nach Fig. 5 entlang der Schnittlinie B-B;
Fig. 7 und 8 eine Abwandlung des in Fig. 3 und 4 dargestellten Gehäuses des Haushaltsgeräts;
Fig. 9 und 10 eine weitere Abwandlung des in Fig. 3 und 4 dargestellten Gehäuses des Haushaltsgeräts;
Fig. 11 eine Gesamtansicht des Haushaltsgeräts mit abgehobenem Deckel;
Fig. 12 eine Teilansicht des Haushaltsgeräts, bei der das Öffnen und Abheben des Deckels vom Gehäuse des Haushaltsgeräts dargestellt ist.

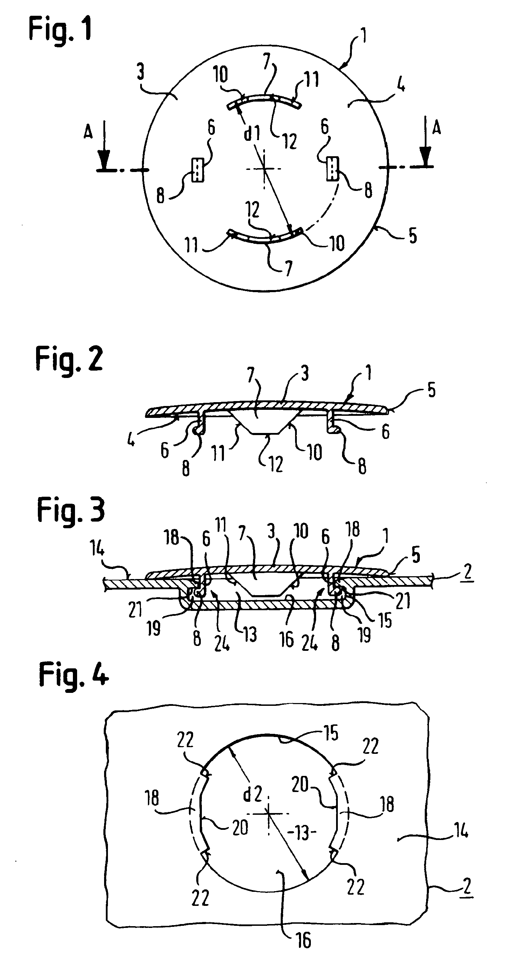

Gemäß Fig. 1 bis Fig. 4 ist ein Deckel 1 zum Verschließen und Öffnen der Zugänglichkeit einer an einem Gehäuse 2 eines Haushaltsgeräts vorgesehenen Schnittstelle (nicht näher gezeigt) dargestellt. Die Schnittstelle kann eine mechanische Schnittstelle sein, an der mechanische Wellenarbeit angezapft werden kann. Die Schnittstelle kann jedoch auch eine elektrische Schnittstelle sein, wie beispielsweise eine elektrische Steckdose oder ein elektrischer Stecker, zum Übertragen von Energie und/oder Signalen.

Der Deckel 1 ist als eine kreisförmige Scheibe 3 ausgebildet, die auf der Innenfläche 4 leicht konkav ausgebildet ist, so daß in geschlossenem Zustand des Deckels 1 nach Fig. 3 ein Umfangsrand 5 des Deckels 1 am Gehäuse 2 bündig anliegt.

Von der Innenfläche 4 der Scheibe 3 erstrecken sich in etwa lotrecht und auf einem zum Umfang der Scheibe 3 konzentrisch liegenden Kreis 2 diametral gegenüberliegende Klinkenhebel 6 und um 90° gegenüber den Klinkenhebeln 6 versetzt zwei diametral gegenüberliegende Nocken 7. Sowohl die Klinkenhebel 6 als auch die Nocken 7 sind einstückig am Deckel 1 ausgebildet. Am in Fig. 2 dargestellten unteren Ende des Klinkenhebels 6 ist eine Klinke 8 ausgebildet, die sich radial nach außen erstreckt. Der Klinkenhebel 6 ist federelastisch ausgebildet, so daß die Klinke 8 innerhalb des elastischen Bereichs des Klinkenhebels 6 um den Befestigungsbereich am Deckel schwenkbeweglich ist. Jede Nocke ist als zylindrischer Wandabschnitt ausgebildet und hat eine erste schiefe Ebene 10 und eine zweite schiefe Ebene 11 und einen zwischen den schiefen Ebenen 10 und 11 sich erstreckenden Plateauabschnitt 12. Durch die Ausbildung der ersten und zweiten schiefen Ebene 10 und 11 verjüngt sich die in Fig. 2 und 3 dargestellte Nocke 7 von oben nach unten.

Gemäß Fig. 3 und 4 hat das Gehäuse 2 im Bereich der Schnittstelle eine topfförmige Vertiefung 13, die einen sich von einer Außenfläche 14 des Gehäuses 2 in den Innenbereich des Gehäuses 2 erstreckenden zylindrischen Wandabschnitt 15 und eine die Vertiefung 13 in Fig. 3 nach unten begrenzende Bodenfläche 16 hat. Der Durchmesser d2 des zylindrischen Wandabschnitts 15 ist etwas größer als der Durchmesser d1, auf dem sich die Klinkenhebel 6 und die Nocken 7 am Deckel 1 befinden. An zwei diametral gegenüberliegenden Stellen erstreckt sich jeweils in Verlängerung der Außenfläche 14 des Gehäuses 2 ein kreisringförmiger, radial nach innen zur Vertiefung 13 gerichteter Vorsprung 18. Zwischen dem radialen Vorsprung 18 und der Bodenfläche 16 wird jeweils eine Hinterschneidung 19 ausgebildet. Jeder radiale Vorsprung 18 hat eine radial zur Vertiefung 13 nach innen gerichtete Umfangsfläche 20, eine Unterseite 21 und zwei Stirnseiten 22. Bei geschlossenem Deckel 1 bilden die Klinkenhebel 6 mit ihren Klinken 8 und die durch die Vorsprünge 18 gebildeten Hinterschneidungen 19 eine Klemmeinrichtung 24 aus.

Der Deckel 1 und das Gehäuse 2 werden bevorzugt mittels eines Spritzgießverfahrens hergestellt.

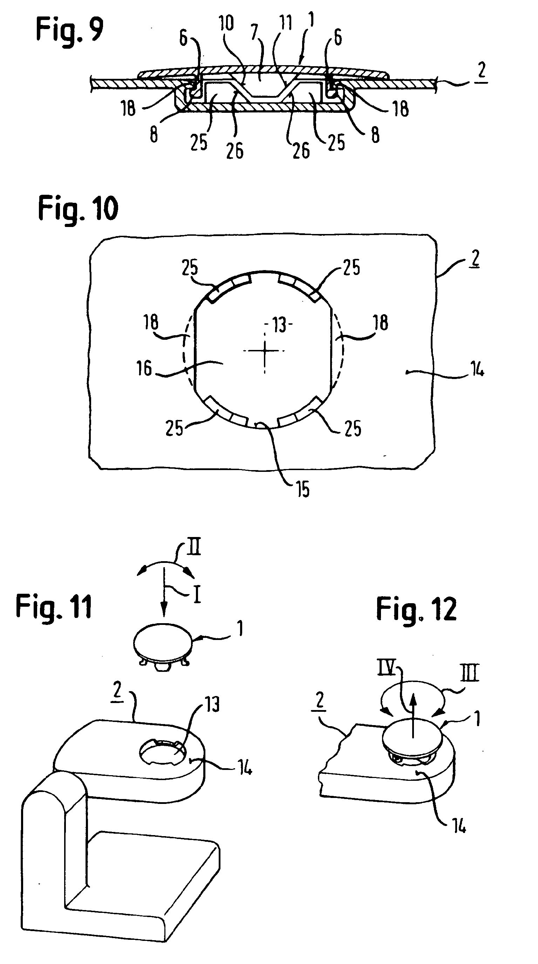

Gemäß Fig. 11 wird der Deckel 1 in Richtung des Pfeils I senkrecht von oben derart auf die in der Vertiefung 13 des Gehäuses 2 ausgebildeten Vorsprünge 18 aufgesetzt, daß die Klinkenhebel 6 mit ihren Klinken 8 über einen mittleren Abschnitt der Vorsprünge 18 über die radiale Umfangsfläche 20 gleiten, bis die Klinken 8 in die Hinterschneidungen 19 auf den Unterseiten 21 der Vorsprünge 18 einrasten. Die Nocken 7 kommen dabei in einem Bereich zwischen den Vorsprüngen 18 zu liegen. Um diese Position zu erreichen, kann es erforderlich sein den Deckel während des Aufsetzens entlang des Pfeils II hin oder her zu drehen. Wenn die Klinken 8 mit den Hinterschneidungen 19 verrastet sind, liegt der Umfangsrand 5 des Deckels 1 auf der Außenfläche 14 des Gehäuses 2 bündig auf. Damit ist die Zugänglichkeit zur Schnittstelle unterbunden, wobei ein Eindringen von Schmutz und dergleichen nicht möglich ist.

Zum Öffnen des Deckels 1 wird der Deckel 1 gemäß Pfeil III nach Fig. 12 nach links oder rechts gedreht, bis die schiefen Ebenen 10 oder 11 der Nocken 7 an den Stirnseiten 22 der Vorsprünge 18 anliegen und bei weiterem Drehen des Deckels die schiefen Ebenen 10 oder 11 über die Vorsprünge 18 gleiten, wobei der Deckel gegenüber der Außenfläche 14 des Gehäuses 2 abgehoben und die zwischen den Klinken 8 und den Hinterschneidungen 19 ausgebildete Klemmeinrichtung 24 gelöst wird.

Die Drehbewegung des Deckels gegenüber dem Gehäuse in Richtung des Pfeils III (Fig. 12) kann durch Haftreibung zwischen den Fingern eines Benutzers und der Deckeloberfläche aufgebracht werden, wobei auf das Vorsehen von Griffmulden am Deckel verzichtet werden kann, da der erforderliche Kraftaufwand gering ist.

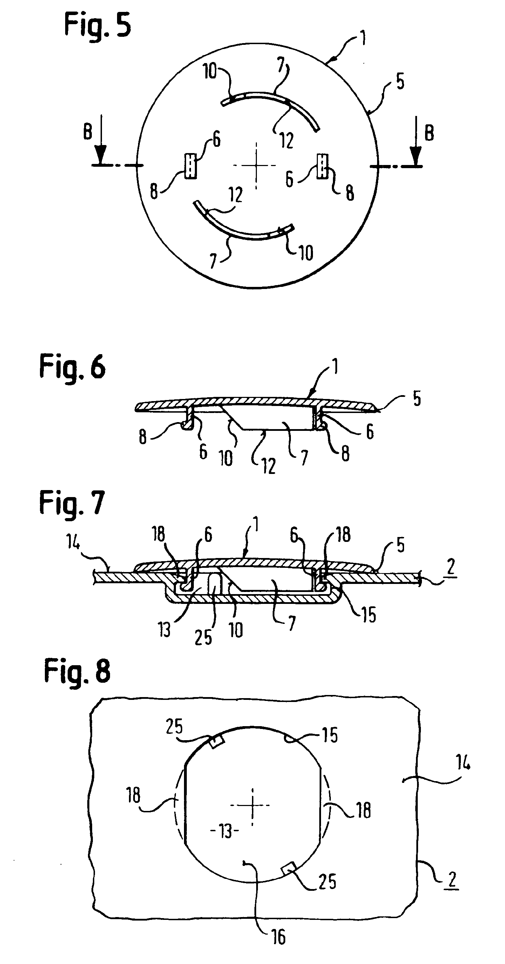

Gemäß Fig. 5 und 6 ist eine Abwandlung der Nocken 7 dargestellt, die im Unterschied zur Nocke 7 gemäß Fig. 1 bis 3 nur eine schiefe Ebene aufweist, so daß dieser Deckel 1 nur durch eine Drehbewegung (Pfeil III), vorliegend im Uhrzeigersinn, geöffnet werden kann.

Gemäß Fig. 7 und 8 ist ein zusätzlicher Vorsprung 25 am zylindrischen Wandabschnitt 15 derart ausgebildet, daß er bei geschlossenem Deckel 1 benachbart zur schiefen Ebene positioniert ist. Die Vorsprünge 18 sind bei dieser Abwandlung als Scheibenabschnitt ausgebildet. Bei dieser Abwandlung nach Fig. 7 und 8 dienen die Vorsprünge 18 lediglich zum Eingriff mit den Klinkenhebeln 6, wobei die zusätzlichen Vorsprünge 25 zum Eingriff mit den schiefen Ebenen 10 oder 11 vorgesehen sind.

Gemäß Fig. 9 und 10 ist eine Abwandlung der zusätzlichen Vorsprünge 25 nach Fig. 7 und 8 dahingehend ausgebildet, daß die zusätzlichen Vorsprünge 25 eine Eingriffsfläche 26 haben, die bei geschlossenem Deckel 1 parallel und etwas beabstandet zu den jeweils korrespondierenden schiefen Ebenen 10 und 11 positioniert sind. Bei der Abwandlung nach Fig. 9 und 10 ist ein besonders genaues Positionieren der Klinkenhebel 6 zu den Vorsprüngen 18 möglich.

Alternativ zum vorstehenden Ausführungsbeispiel mit zugehörigen Abwandlungen, bei denen die Nocken 7 am Deckel 1 und die Vorsprünge 18 am Gehäuse 2 angeordnet sind, können die Nocken 7 am Gehäuse 2 und die Vorsprünge am Deckel 1 vorgesehen sein.

Alternativ zur Anordnung der Nocken 7 und der Vorsprünge 18 auf einem Kreisumfang, wie im vorstehenden Ausführungsbeispiel dargestellt ist, kann ein Nocken 7 und ein mit dem Nocken 7 zusammenwirkender Vorsprung 18 entlang einer Geraden angeordnet sein, wobei zum Öffnen des Deckels 1 anstatt einer Drehbewegung eine translatorische Bewegung gegenüber dem Gehäuse 2 auszuführen ist.

## Patentansprüche

1. Deckel zum Verschließen und Öffnen einer an einem Gehäuse (2) eines Haushaltsgeräts wie einer Küchenmaschine oder dergleichen vorgesehenen Öffnung, wie einer Schnittstelle zum Ankoppeln eines Bearbeitungswerkzeugs oder dergleichen,
**gekennzeichnet durch**
eine entweder am Deckel (1) oder am Gehäuse (2) angeordnete Nocke (7) und einen am jeweiligen Gegenstück, entweder an dem Gehäuse (2) oder an dem Deckel (1) angeordneten Vorsprung (18, 25), wobei in geschlossenem Zustand des Deckels (1) die Nocke (7) zum Vorsprung (18, 25) derart angeordnet ist, dass bei einer Bewegung des Deckels (1) und/oder des Gehäuses (2) der Vorsprung (18, 25) auf die Nocke (7) aufgleitet, wodurch der Deckel (1) gegenüber dem Gehäuse (2) abhebt.

2. Deckel nach Anspruch 1, **dadurch gekennzeichnet, daß** zwischen dem Deckel (1) und dem Gehäuse (2) eine Klemmeinrichtung (24) vorgesehen ist, mit der der Deckel (1) in geschlossenem Zustand gegenüber dem Gehäuse (2) klemmend gehalten wird.

3. Deckel nach Anspruch 2, **dadurch gekennzeichnet, daß** die Klemmeinrichtung (24) einen am Deckel (1) angeordneten federelastischen Klinkenhebel (6) hat, der bei geschlossenem Deckel (1) mit einer am Gehäuse (2) ausgebildeten Hinterschneidung (19) verrastbar ist.

4. Deckel nach einem der vorstehenden Ansprüche 1 bis 3, **dadurch gekennzeichnet, daß** die Nocke (7) als eine am Deckel (1) vorgesehene erste schiefe Ebene (10) ausgebildet ist, die in Kontakt mit dem am Gehäuse (2) vorgesehenen Vorsprung (7) bringbar ist.

5. Deckel nach einem der vorstehenden Ansprüche 1 bis 4, **dadurch gekennzeichnet, daß** im Gehäuse (2) um die abzudeckende Schnittstelle eine topfförmige Vertiefung (13) ausgebildet ist, die einen zylindrischen Wandabschnitt (15) und eine Bodenfläche (16) hat, wobei der Klinkenhebel (6) und/oder die Nocke (7) auf einem Kreis am Deckel (1) angeordnet ist/sind, der kleiner im Durchmesser (d1) als der innere Durchmesse (d2) des zylindrischen Wandabschnitts (15) ist.

6. Deckel nach einem der Ansprüche 1 bis 5, **dadurch gekennzeichnet, daß** zwei diametral gegenüberliegende ferderelastische Klinkenhebel (6) und zu den Klinkenhebeln (6) beabstandete, zwei diametral gegenüberliegende Nocken (7), am Deckel (1) ausgebildet sind.

7. Deckel nach Anspruch 5, **dadurch gekennzeichnet, daß** der Vorsprung als radialer Vorsprung (18, 25) ausgebildet ist, der sich vom zylindrischen Wandabschnitt (15) radial in die Vertiefung (13) erstreckt, um zwischen der Bodenfläche (16) und dem radialen Vorsprung (18, 25) eine Hinterschneidung (19) zum Eingriff des federelastischen Klinkenhebels (6) auszubilden, wobei beim Drehen des geschlossenen Deckels (1) die Nocke (7) mit dem radialen Vorsprung (18, 25) in Eingriff bringbar und der Deckel (1) gegenüber einer Außenfläche (14) des Gehäuses (2) abhebbar ist.

8. Deckel nach Anspruch 4, **dadurch gekennzeichnet, daß** die Nocke (7) eine zur ersten schiefen Ebene (10) gegenüberliegende zweite schiefe Ebene (11) hat und zu beiden Seiten der Nocke (7) je ein Vorsprung (18, 25) angeordnet ist, so daß bei jeder Drehrichtung des geschlossenen Deckels (1) die Nocke (7) mit einem der beiden benachbarten Vorsprünge (18, 25) in Kontakt bringbar und der Deckel (1) abhebbar ist.

9. Deckel nach einem der vorstehenden Ansprüche 1 bis 8, **dadurch gekennzeichnet, daß** die Schnittstelle eine mechanische Schnittstelle oder eine elektrische Schnittstelle ist.

## Claims

1. Cover for closing and opening an opening provided at a housing (2) of a domestic appliance such as a food processor or the like, such as an interface for coupling of a processing tool or the like, **characterised by** a dog (7) arranged either at the cover (1) or at the housing (2) and a projection (18, 25) arranged at the respective counter-member, i.e. either at the housing (2) or at the cover (1), wherein in closed state of the cover (1) the dog (7) is arranged relative to the projection (18, 25) in such a manner that on movement of the cover (1) and/or the housing (2) the projection (18, 25) slides on the dog (7), whereby the cover (1) lifts relative to the housing (2).

2. Cover according to claim 1, **characterised in that** a clamping device (24) by which the cover (1) in closed state is kept clamped relative to the housing (2) is provided between the cover (1) and the housing (2).

3. Cover according to claim 2, **characterised in that** the clamping device (24) has a resilient latch lever (6) which is arranged at the cover (1) and which when the cover (1) is closed can be detented with an undercut (19) formed at the housing (2).

4. Cover according to one of the preceding claims 1 to 3, **characterised in that** the dog (7) is formed as a first oblique plane (10) which is provided at the cover (1) and which can be brought into contact with the projection (7) provided at the housing (2).

5. Cover according to one of the preceding claims 1 to 4, **characterised in that** a pot-shaped depression (13) having a cylindrical wall section (15) and a base surface (16) is formed in the housing (2) around the interface to be covered, wherein the latch lever (6) and/or the dog (7) is or are arranged on a circle at the cover (1) which is smaller in diameter (d1) than the inner diameter (d2) of the cylindrical wall section (15).

6. Cover according to one of claims 1 to 5, **characterised in that** two diametrically opposite resilient latch levers (6) and two diametrically opposite dogs (7), which are spaced from the latch levers (6), are formed at the cover (1).

7. Cover according to claim 5, **characterised in that** the projection is formed as a radial projection (18, 25) which extends radially from the cylindrical wall section (15) into the depression (13) in order to form between the base surface (16) and the radial projection (18, 25) an undercut (19) for engagement of the resilient latch lever (6), wherein on rotation of the closed cover (1) the dog (7) can be brought into engagement with the radial projection (18, 25) and the cover (1) can be raised relative to an outer surface (14) of the housing (2).

8. Cover according to claim 4, **characterised in that** the dog (7) has a second oblique plane (11) opposite the first oblique plane (10) and a respective projection (18, 25) is arranged on either side of the dog (7) so that in each rotational direction of the closed cover (1) the dog (7) can be brought into contact with one of the two adjacent projections (18, 25) and the cover (1) can be raised.

9. Cover according to one of the preceding claims 1 to 8, **characterised in that** the interface is a mechanical interface or an electrical interface.

## Revendications

1. Couvercle pour la fermeture et l'ouverture d'une ouverture prévue sur un boîtier (2) d'un appareil ménager comme un robot ménager ou similaire, comme une interface pour le rattachement d'un outil de travail ou similaire,
**caractérisé par**
une came (7) disposée sur le couvercle (1) ou sur le boîtier (2) et une saillie (18, 25) disposée sur le pendant respectif, sur le boîtier (2) ou sur le couvercle (1), la came (7) étant disposée par rapport à la saillie (18, 25), lorsque le couvercle (1) est fermé, de telle sorte que, lors d'un mouvement du couvercle (1) et/ou du boîtier (2), la saillie (18, 25) glisse sur la came (7), de sorte que le couvercle (1) se lève par rapport au boîtier (2).

2. Couvercle selon la revendication 1, **caractérisé en ce que** entre le couvercle (1) et le boîtier (2) est prévu un dispositif de serrage (24), avec lequel le couvercle (1) est maintenu par serrage par rapport au boîtier (2) dans l'état fermé.

3. Couvercle selon la revendication 2, **caractérisé en ce que** le dispositif de serrage (24) a un levier à cliquet (6) élastique comme un ressort disposé sur le couvercle (1), qui peut être encliqueté avec une contre-dépouille (19) réalisé sur le boîtier (2) lorsque le couvercle (1) est fermé.

4. Couvercle selon l'une quelconque des revendications 1 à 3 précédentes, **caractérisé en ce que** la came (7) est réalisée sous la forme d'un premier plan (10) incliné, prévu sur le couvercle (1), qui peut être mis en contact avec la saillie (7) prévue sur le boîtier (2).

5. Couvercle selon l'une quelconque des revendications 1 à 4 précédentes, **caractérisé en ce que** dans le boîtier (2), autour de l'interface à recouvrir, est réalisée une cavité (13) en forme de pot, qui a une partie de paroi (15) cylindrique et une surface de fond (16), le levier à cliquet (6) et/ou la came (7) étant disposés sur un cercle sur le couvercle (1), qui est inférieur en diamètre (d1) au diamètre intérieur (d2) de la partie de paroi (15) cylindrique.

6. Couvercle selon l'une quelconque des revendications 1 à 5, **caractérisé en ce que** deux leviers à cliquet (6) élastiques comme un ressort et diamétralement opposés et deux cames (7) diamétralement opposées, espacées par rapport aux leviers à cliquet (6), sont réalisés sur le couvercle (1).

7. Couvercle selon la revendication 5, **caractérisé en ce que** la saillie est réalisée sous la forme d'une saillie (18, 25) radiale, qui s'étend depuis la partie de paroi (15) cylindrique radialement dans la cavité (13), afin de réaliser entre la surface de fond (16) et la saillie (18, 25) radiale une contre-dépouille (19) pour l'engagement du levier à cliquet (6) élastique comme un ressort, la came (7) pouvant être amenée en prise avec la saillie (18, 25) radiale, lors de la rotation du couvercle (1) fermé et le couvercle (1) pouvant être soulevé par rapport à une surface extérieure (14) du boîtier (2).

8. Couvercle selon la revendication 4, **caractérisé en ce que** la came (7) a un second plan (11) incliné opposé au premier plan (10) incliné et une saillie (18, 25) est disposée de chaque côté de la came (7), de sorte que, pour chaque sens de rotation du couvercle (1) fermé, la came (7) peut être amenée en contact avec l'une des deux saillies (18, 25) voisines et le couvercle (1) peut être soulevé.

9. Couvercle selon l'une quelconque des revendications 1 à 8 précédentes, **caractérisé en ce que** l'interface est une interface mécanique ou une interface électrique.
